# EUROPEAN PATENT APPLICATION

(11) **EP 4 401 181 A1**
(43) Date of publication of application: **17.07.2024**
(21) Application number: 23215581.2
(22) Date of filing: 11.12.2023
(51) Int. Cl.: H01M 10/04, H01M 10/052, H01M 10/0587, H01M 50/528, H01M 50/531

(54) **CYLINDRICAL SECONDARY BATTERY**

(30) Priority: 11.01.2023 KR 20230004136
(71) Applicant: Samsung SDI Co., Ltd., Yongin-si, Gyeonggi-do 17084 (KR)
(72) Inventor: PARK, Seung Young, 17084 Yongin-si (KR); KIM, Gwi Jae, 17084 Yongin-si (KR); KIM, Hae Ju, 17084 Yongin-si (KR); CHOI, Woo Sung, 17084 Yongin-si (KR)
(74) Representative: Marks & Clerk LLP

(57) **Abstract**

Embodiments relate to a cylindrical secondary battery (100) including a can (110) having a cylindrical shape and an open one end portion, an electrode assembly (120) which is wound in a cylindrical shape by stacking a first electrode plate (121) including a first electrode uncoated portion (121a), a separator (123), and a second electrode plate (122) including a second electrode uncoated portion (122a) disposed in a direction opposite to the first electrode uncoated portion (121a) and accommodated in the can (110), and a cap assembly (140) to close the open one end portion of the can (110) in a state in which the electrode assembly (120) is accommodated in the can (110), wherein the first electrode uncoated portion (121a) includes a first substrate tab (121c) which is partially cut and folded to protrude outward from the first electrode uncoated portion (121a), and the second electrode uncoated portion (122a) includes a second substrate tab (122c) which is partially cut and folded to protrude outward from the second electrode uncoated portion (122a).

## Description

### BACKGROUND

### 1. Field

The present disclosure relates to a cylindrical secondary battery.

### 2. Description of the Related Art

In general, a cylindrical secondary battery includes an electrode assembly wound in a cylindrical shape, a can having a cylindrical shape and accommodating the electrode assembly and an electrolyte, and a cap assembly coupled to an opening formed at one end portion of the can to seal the can and allow a current generated by the electrode assembly to flow to an external device. The electrode assembly includes a positive electrode plate coated with a positive electrode active material, a negative electrode plate coated with a negative electrode active material, and a separator interposed between the positive electrode plate and the negative electrode plate to prevent a short circuit.

In addition, in the cylindrical secondary battery, a tab is used as a terminal for electrical connection. A method in which an uncoated portion (uncoated region) of an electrode plate is formed, and then a metal tab (for example, aluminum for a positive electrode and nickel/nickel plating or alloy for a negative electrode) is welded thereon, is mainly used.

However, when stress inside an electrode assembly increases due to a composition and a component of an electrode and due to the thickness and strength of the tab, cracking of an electrode plate and deformation of the electrode assembly may occur to adversely affect the safety and reliability of the battery. Therefore, there is a need for a method of addressing such problems.

The above information disclosed in this background section is only for enhancement of understanding of the background of the disclosure and therefore may contain information that does not constitute the related art.

### SUMMARY

An cylindrical secondary battery according to the present disclosure includes a can having a cylindrical shape and an open one end portion, an electrode assembly which is wound in a cylindrical shape by stacking a first electrode plate including a first electrode uncoated portion, a separator, and a second electrode plate including a second electrode uncoated portion disposed in a direction opposite to the first electrode uncoated portion and is accommodated in the can, and a cap assembly configured to close the open one end portion of the can in a state in which the electrode assembly is accommodated in the can, wherein the first electrode uncoated portion includes a first substrate tab that is partially cut and folded to protrude outwardly from the first electrode uncoated portion, and the second electrode uncoated portion includes a second substrate tab which is partially cut and folded to protrude outwardly from the second electrode uncoated portion.

The cylindrical secondary battery may further include an insulating tape attached to each of the first electrode uncoated portion and the second electrode uncoated portion.

A size of a region to which the insulating tape is attached may correspond to a size of each of the first electrode uncoated portion and the second electrode uncoated portion.

A size of a region to which the insulating tape is attached may be greater than a size of each of the first electrode uncoated portion and the second electrode uncoated portion.

Thicknesses of the first substrate tab and the second substrate tab may be less than or equal to thicknesses of an active material layer of the first electrode plate and an active material layer of the second electrode plate, respectively.

The first substrate tab and the second substrate tab may be formed as a plurality of first substrate tabs and a plurality of second substrate tabs in a length direction of the first electrode plate and the second electrode plate, respectively.

When the electrode assembly is wound, the plurality of first substrate tabs may overlap each other, and the plurality of second substrate tabs may overlap each other.

The cylindrical secondary battery may further include a lead tab electrically connected to each of the first substrate tab and the second substrate tab and electrically connected to the cap assembly.

When the first substrate tab and the second substrate tab are welded to the lead tab, and a width of the lead tab is greater than a width of each of the first substrate tab and the second substrate tab, a width of a welded portion may correspond to or may be less than a width of each of the first substrate tab and the second substrate tab.

When the first substrate tab and the second substrate tab are welded to the lead tab, and a width of the lead tab is less than a width of each of the first substrate tab and the second substrate tab, a size of a welded portion may be less than a size of the lead tab.

Each of the first substrate tab and the second substrate tab may be cut to have a length that is less than or equal to that of a reference line preset in a width direction of the first electrode plate and the second electrode plate.

Each of the first substrate tab and the second substrate tab may be cut to be longer than a reference line preset in a width direction of the first electrode plate and the second electrode plate.

An cylindrical secondary battery according to the present disclosure includes a can having a cylindrical shape and an open one end portion, an electrode assembly which is wound in a cylindrical shape by stacking a first electrode plate including a first electrode uncoated portion, a separator, and a second electrode plate including a second electrode uncoated portion disposed in a direction opposite to the first electrode uncoated portion and is accommodated in the can, and a cap assembly configured to close the open one end portion of the can in a state in which the electrode assembly is accommodated in the can, wherein the first electrode uncoated portion includes a first substrate tab which is partially cut to form a first cutout portion and is folded such that the first cutout portion protrudes outward from the first electrode uncoated portion, and the second electrode uncoated portion includes a second substrate tab which is partially cut to form a second cutout portion and is folded such that the second cutout portion protrudes outward from the second electrode uncoated portion.

A first overlapping portion and a second overlapping portion respectively overlapping the first electrode uncoated portion and the second electrode uncoated portion may be formed at the first substrate tab and the second substrate tab.

A length of each of the first cutout portion and the second cutout portion corresponding to a width direction of each of the first electrode plate and the second electrode plate may be greater than or equal to a sum of a length of each of the first overlapping portion and the second overlapping portion corresponding to the width direction of each of the first electrode plate and the second electrode plate and a length of a portion welded to the lead tab.

A width of each of the first cutout portion and the second cutout portion corresponding to a length direction of each of the first electrode plate and the second electrode plate may be greater than or equal to a width of a portion welded to the lead tab.

The cylindrical secondary battery may further include an insulating tape attached to each of the first electrode uncoated portion and the second electrode uncoated portion.

A size of a region to which the insulating tape is attached may correspond to a size of each of the first electrode uncoated portion and the second electrode uncoated portion.

A size of a region to which the insulating tape is attached may be greater than a size of each of the first electrode uncoated portion and the second electrode uncoated portion.

Thicknesses of the first substrate tab and the second substrate tab may be less than or equal to thicknesses of an active material layer of the first electrode plate and an active material layer of the second electrode plate, respectively.

The can may have an open upper end portion, and the cap assembly may be coupled to the upper end portion of the can.

The first substrate tab may protrude toward the cap assembly to electrically connect the first electrode plate and the cap assembly, and the second substrate tab may protrude toward a bottom surface of the can to electrically connect the second electrode plate and the bottom surface of the can.

The can may have an open lower end portion, the cap assembly may be coupled to the lower end portion of the can, and the cylindrical secondary battery may further include a terminal positioned on an upper surface of the can having a cylindrical shape.

The first substrate tab may protrude toward the terminal to electrically connect the first electrode plate and the terminal, and the second substrate tab may protrude toward the cap assembly to electrically connect the second electrode plate and the can.

At least some of the above and other features of the invention are set out in the claims.

### BRIEF DESCRIPTION OF DRAWINGS

Features will become apparent to those of skill in the art by describing in detail embodiments with reference to the attached drawings in which:
FIGS. 1A, 1B, and 1C are a perspective view, an exploded perspective view, and a cross-sectional view of a cylindrical secondary battery according to various embodiments of the present disclosure, respectively.
FIG. 2 is a set of front views illustrating a process of forming substrate tabs of some electrode assemblies of a cylindrical secondary battery according to various embodiments of the present disclosure.
FIG. 3 is an enlarged plan view illustrating a main part of portions folded when the substrate tabs of FIG. 2 are formed.
FIG. 4A is a side view illustrating a portion of an electrode assembly in which a substrate tab protrudes upward and is connected to a lead tab in a cylindrical secondary battery according to various embodiments of the present disclosure.
FIG. 4B is a side view illustrating a portion of an electrode assembly in which a substrate tab protrudes downward and is connected to a lead tab in a cylindrical secondary battery according to various embodiments of the present disclosure.
FIGS. 5A and 5B are front views illustrating various cutout lengths when the substrate tab of FIG. 2 is formed.
FIGS. 6A and 6B are front views illustrating various embodiments when the substrate tab of FIG. 2 and a lead tab are welded.
FIG. 7 is a set of front views illustrating a process of forming a plurality of substrate tabs of some electrode assemblies of a cylindrical secondary battery according to various embodiments of the present disclosure.
FIG. 8 is a perspective view and a cross-sectional view of a cylindrical secondary battery according to various embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. In addition, in the present specification, it will be understood that, when a member A is referred to as being "connected to" a member B, the member A may be directly connected to the member B or an intervening member C may be present therebetween such that the member A and the member B are indirectly connected to each other.

The terminology used herein is for the purpose of describing particular embodiments only and is not intended to limit the present disclosure. As used herein, the singular forms are intended to include the plural forms as well, unless the context clearly indicates otherwise. It will be further understood that the terms "comprise or include" and/or "comprising or including," when used in this specification, specify the presence of stated shapes, numbers, steps, operations, members, elements, and/or groups thereof but do not preclude the presence or addition of one or more other shapes, numbers, steps, operations, members, elements, and/or groups thereof.

It is apparent that, although the terms "first," "second," and the like are used herein to describe various members, parts, regions, layers, and/or portions, these members, parts, regions, layers, and/or portions are not limited by these terms. These terms are only used to distinguish one member, part, region, layer, or portion from another member, part, region, layer, or portion. Accordingly, a first member, part, region, layer, or a portion which will be described below may denote a second member, part, region, layer, or portion without deviating from teachings of the present disclosure.

Spatially relative terms, such as "beneath," "below," "lower," "above," "upper," "upward," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements or features described as "below" or "beneath" other elements or features would then be oriented "above" or "over" the other elements or features. Thus, the term "below" can encompass both an orientation of "above" and "below."

Hereinafter, a cylindrical secondary battery 100 according to an embodiment of the present disclosure will be described in detail with reference to the accompanying drawings.

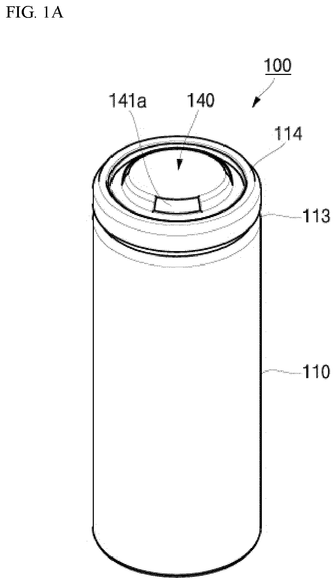

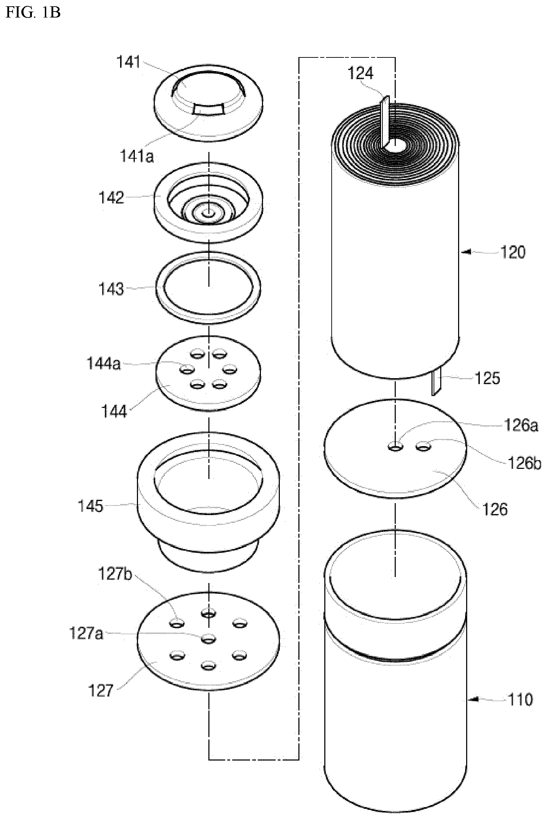

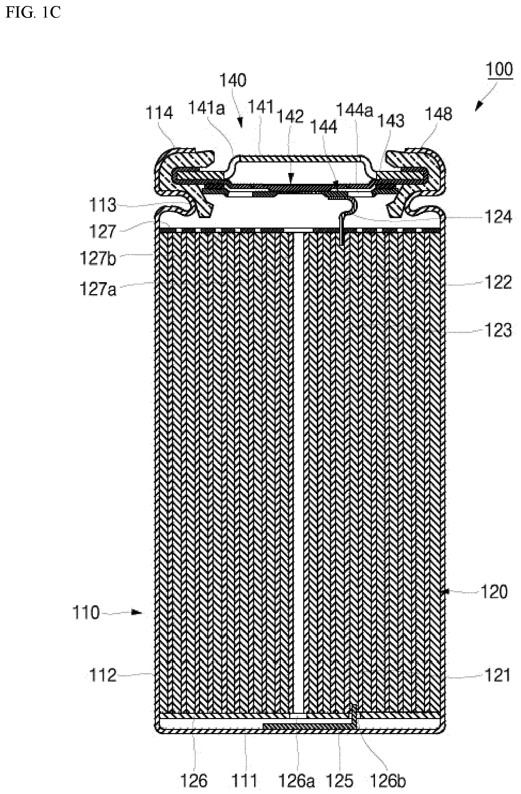

FIGS. 1A, 1B, and 1C are a perspective view, an exploded perspective view, and a cross-sectional view of the cylindrical secondary battery 100 respectively, according to an embodiment of the present disclosure.

As shown in FIGS. 1A, 1B, and 1C, the cylindrical secondary battery 100 according to the embodiment includes a can 110 having a cylindrical shape, an electrode assembly 120 having a cylindrical shape, and a cap assembly 140.

The can 110 may include a bottom portion 111 having a circular shape and a side portion 112 that has a cylindrical shape and extends upwardly from the bottom portion 111 by a certain length. During a manufacturing process of the secondary battery, an upper portion of the cylindrical can 110 may be open. Accordingly, during an assembly process of the secondary battery, the electrode assembly 120 may be inserted into the cylindrical can 110 together with an electrolyte.

In some embodiments, the cylindrical can 110 may include steel, a steel alloy, aluminum, an aluminum alloy, or an equivalent thereof. In some embodiments, the can may include a case or housing or may be referred to as a case or housing. In some embodiments, the cylindrical can 110 may include a beading part 113 recessed inwardly below the cap assembly 140 and a crimping part 114 bent inwardly on the cap assembly 140 such that the electrode assembly 120 and the cap assembly 140 do not deviate to the outside.

The electrode assembly 120 is accommodated in the cylindrical can 110. The electrode assembly 120 includes a first electrode plate 121, a second electrode plate 122, and a separator 123. In some embodiments, the first electrode plate 121 may be a positive electrode plate, and the second electrode plate 122 may be a negative electrode plate. It is to be understood that the reverse is also possible. Hereinafter, for convenience of description, a case in which the first electrode plate 121 is a positive electrode plate and the second electrode plate 122 is a negative electrode plate will be described.

The electrode assembly 120 may include the positive electrode plate 121 including a first active material layer 121b coated with a positive electrode active material (for example, a transition metal oxide (LiCoO₂, LiNiO₂, LiMn₂O₄, or the like)), the negative electrode plate 122 including a second active material layer 122b coated with a negative electrode active material (for example, graphite, carbon, or the like), and the separator 123 positioned between the positive electrode plate 121 and the negative electrode plate 122 to prevent a short circuit and enable only movement of lithium ions. Hereinafter, for convenience of description, the first active material layer 121b and the second active material layer 122b will be described as a positive electrode active material layer 121b and a negative electrode active material layer 122b, respectively.

In some embodiments, the positive electrode plate 121, the negative electrode plate 122, and the separator 123 are wound in an approximately cylindrical shape. In some embodiments, the positive electrode plate 121 may include an aluminum (Al) foil, the negative electrode plate 122 may include a copper (Cu) or nickel (Ni) foil, and the separator 123 may include polyethylene (PE) or polypropylene (PP).

In some embodiments, in the positive electrode plate 121, at least one surface of a plate-shaped metal foil made of aluminum (Al) is coated with a positive electrode active material such as a transition metal oxide. A first electrode uncoated portion 121a not coated with the positive electrode active material may be provided at an upper end portion of the positive electrode plate 121. The first electrode uncoated portion 121a may protrude in an upward direction of the electrode assembly 120. That is, the first electrode uncoated portion 121a of the first electrode plate 121 may protrude upwardly further than the negative electrode plate 122 and the separator 123.

In addition, in some embodiments, in the negative electrode plate 122, at least one surface of a plate-shaped metal foil made of copper (Cu) or nickel (Ni) may be coated with a negative electrode active material such as graphite or carbon. A second electrode uncoated portion 122a not coated with the negative electrode active material may be provided at a lower end portion of the negative electrode plate 122. The second electrode uncoated portion 122a may protrude in a downward direction of the electrode assembly 120. That is, the second electrode uncoated portion 122a of the negative electrode plate 122 protrudes in a direction opposite to the first electrode uncoated portion 121a. Thus the second electrode uncoated portion 122a may protrude downwardly further than the positive electrode plate 121 and the separator 123.

In some embodiments, the first electrode uncoated portion 121a may be a positive electrode uncoated portion, and the second electrode uncoated portion 122a may be a negative electrode uncoated portion, or vice versa. Hereinafter, for convenience of description, a case in which the first electrode uncoated portion 121a is a positive electrode uncoated portion and the second electrode uncoated portion 122a is a negative electrode uncoated portion will be described.

In some embodiments, a first substrate tab 121c protruding upwardly by a certain length is provided at the positive electrode uncoated portion 121a of the positive electrode plate 121, and a second substrate tab 122c protruding and extending downward by a certain length is provided at the negative electrode uncoated portion 122a of the negative electrode plate 122, or vice versa.

In some embodiments, when the first substrate tab 121c is cut from the positive electrode uncoated portion 121a, the first substrate tab 121c may include the same material as the positive electrode uncoated portion 121a, such as, for example, aluminum. In addition, when the second substrate tab 122c is cut from the negative electrode uncoated portion 122a, the second substrate tab 122c may include the same material as the negative electrode uncoated portion 122a, for example, copper or nickel. In some embodiments, the first substrate tab 121c may be a positive electrode substrate tab, and the second substrate tab 122c may be a negative electrode substrate tab. It is to be understood that the reverse is also possible. Hereinafter, for convenience of description, a case in which the first substrate tab 121c is a positive electrode substrate tab, and the second substrate tab 122c is a negative electrode substrate tab will be described. Meanwhile, specific configurations of the positive electrode substrate tab 121c and the negative electrode substrate tab 122c will be described below.

In some embodiments, the positive electrode substrate tab 121c of the electrode assembly 120 may be connected to the cap assembly 140, and the negative electrode substrate tab 122c may be connected to the bottom portion 111 of the cylindrical can 110. On the other hand, the positive electrode substrate tab 121c and the cap assembly 140 at an upper side may be electrically connected by a first lead tab 124 welded to the positive electrode substrate tab 121c. In addition, in some embodiments, the negative electrode substrate tab 122c and the bottom portion 111 may be electrically connected by a second lead tab 125 welded to the negative electrode substrate tab 122c. In some embodiments, the positive electrode substrate tab 121c and the cap assembly 140 may be connected by the first lead tab 124, and the negative electrode substrate tab 122c and the bottom portion 111 may be directly connected without a separate lead tab, and vice versa.

In some embodiments, the electrode assembly 120 may be referred to as an electrode group or an electrode. In some embodiments, as described above, the negative electrode substrate tab 122c of the electrode assembly 120 may be welded to the bottom portion 111 of the cylindrical can 110 or may be connected by the second lead tab 125. Therefore, the cylindrical can 110 may operate as a negative electrode. On the contrary, the positive electrode substrate tab 121c may be connected to the bottom portion 111 of the cylindrical can 110, and in this case, the cylindrical can 110 may operate as a positive electrode.

In some embodiments, a first insulating plate 126 may be coupled to the cylindrical can 110 and may have a first hole 126a formed in a central portion and a second hole 126b formed away from the first hole 126a. The first insulating plate 126 may be interposed between the electrode assembly 120 and the bottom portion 111. The first insulating plate 126 may prevent the electrode assembly 120 from being in electrical contact with the bottom portion 111 of the cylindrical can 110. In some embodiments, the first insulating plate 126 may prevent the negative electrode plate 122 of the electrode assembly 120 from being in electrical contact with the bottom portion 111.

In some embodiments, if a large amount of gas were to be generated due to an abnormality of the secondary battery, the first hole 126a could allow the gas to quickly move upward. In addition, the second hole 126b may allow the negative electrode substrate tab 122c or the second lead tab 125 to pass therethrough to be welded to the bottom portion 111.

In some embodiments, a second insulating plate 127 may be coupled to the cylindrical can 110. The second insulating plate 127 may have a first hole 127a formed in a central portion and a plurality of second holes 127b formed away from the first hole 127a. The second insulating plate 127 may be interposed between the electrode assembly 120 and the cap assembly 140. The second insulating plate 127 may prevent the electrode assembly 120 from being in electrical contact with the cap assembly 140. In some embodiments, the second insulating plate 127 may also prevent the positive electrode plate 121 of the electrode assembly 120 from being in electrical contact with the cap assembly 140.

In some embodiments, when a large amount of gas is generated due to an abnormality of the secondary battery, the first hole 127a may allow the gas to quickly move toward the cap assembly 140. In some embodiments, the second hole 127b may allow the positive electrode substrate tab 121c or the first lead tab 124 to pass therethrough to be welded to the cap assembly 140. In addition, the remaining second holes 127b may allow an electrolyte to quickly flow into the electrode assembly 120 in an electrolyte injection process.

In some embodiments, the cap assembly 140 may include a cap-up 141 having a plurality of through-holes 141a, a safety vent 142 positioned below the cap-up 141, and a connection ring 143 and a cap-down 144 which are positioned below the safety vent 142. In some embodiments, the cap-down 144 may be positioned below the safety vent 142 and the connection ring 143. The cap-down may have a plurality of through-holes 144a, and may be electrically connected to the positive electrode substrate tab 121c or the first lead tab 124. In some embodiments, the cap assembly 140 may further include an insulating gasket 145 which insulates the cap-up 141, the safety vent 142, and the cap down 144 from the side portion 112 of the cylindrical can 110.

In some embodiments, the insulating gasket 145 may be pressed between the beading part 113 and the crimping part 114 formed substantially at the side portion 112 of the cylindrical can 110. In some embodiments, when abnormal internal pressure is generated inside the cylindrical can 110, internal gas may be discharged to the outside through the through-hole 141a of the cap-up 141 and the through-hole 144a of the cap-down 144.

In some embodiments, internal gas may invert the safety vent 142 upward through the through-hole 144a of the cap-down 144 so that the safety vent 142 may be electrically separated from the cap-down 144. Subsequently, when the safety vent 142 is torn (opened), the internal gas may be discharged to the outside through the through-hole 141a of the cap-up 141.

In some embodiments, an electrolyte (not shown) may be injected into the cylindrical can 110. The electrolyte may enable movement of lithium ions generated through an electrochemical reaction between the negative electrode plate 122 and the positive electrode plate 121 inside a battery during charging/discharging. Such an electrolyte may include a non-aqueous organic electrolyte solution that is a mixture of a lithium salt and a high-purity organic solvent. In some embodiments, the electrolyte may include a polymer using a polymer electrolyte or a solid electrolyte.

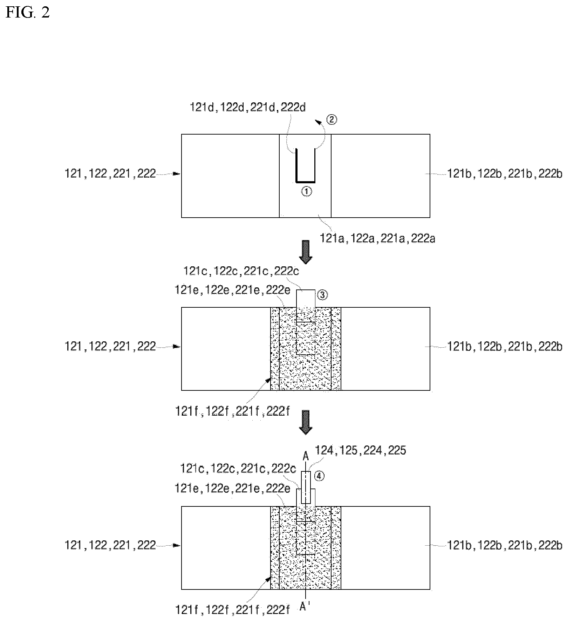

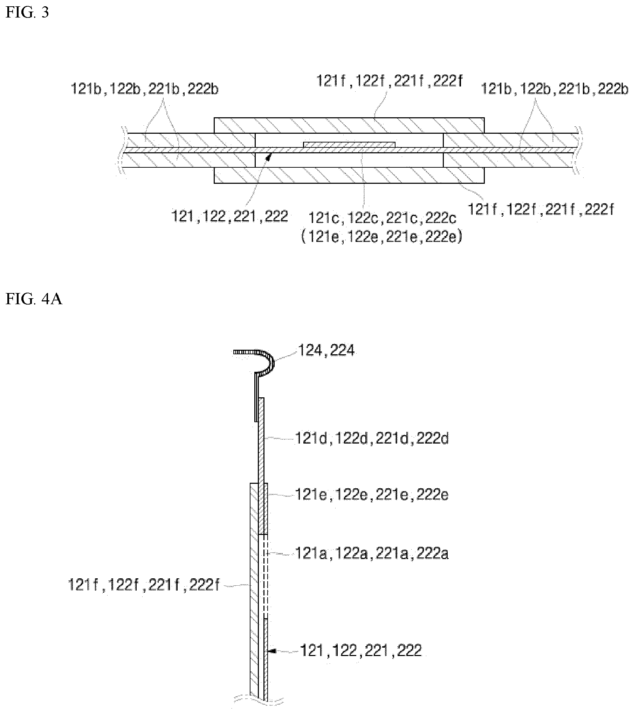

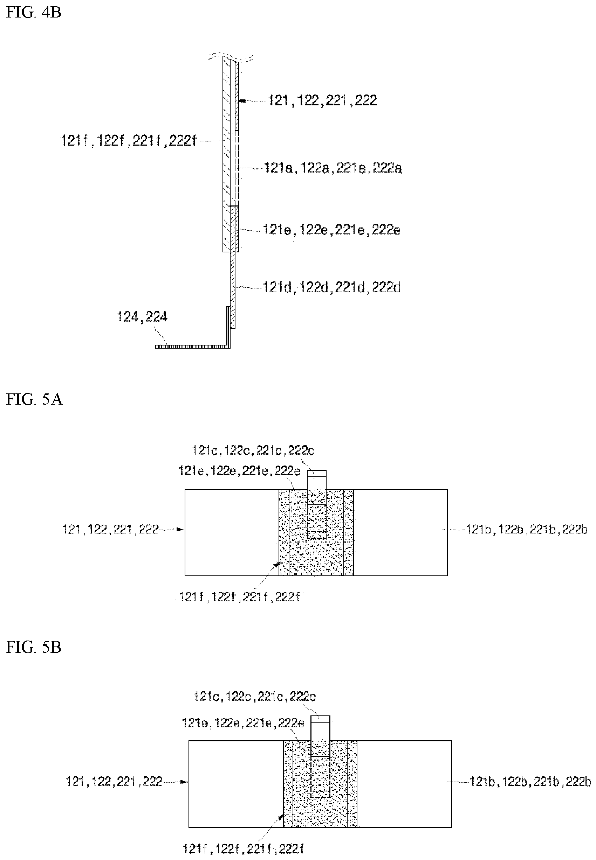

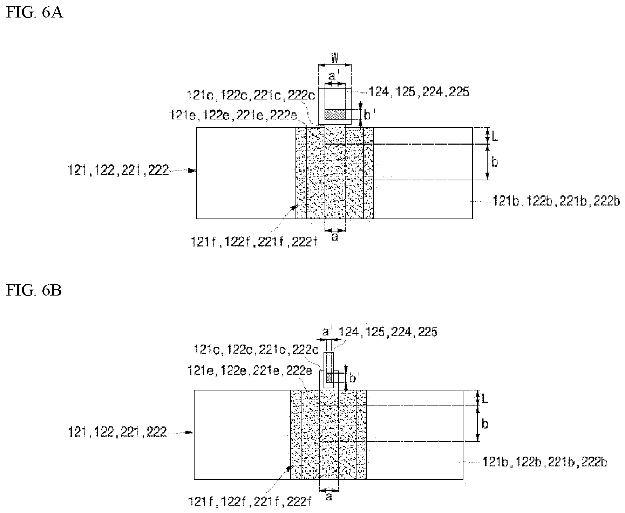

FIG. 2 is a set of front views illustrating a process of forming substrate tabs of some electrode assemblies of a cylindrical secondary battery according to various embodiments of the present disclosure. FIG. 3 is an enlarged plan view illustrating a main part of portions folded when the substrate tabs of FIG. 2 are formed. FIG. 4A is a side view illustrating a portion of an electrode assembly in which a substrate tab protrudes upward and is connected to a lead tab in a cylindrical secondary battery according to various embodiments of the present disclosure, and FIG. 4B is a side view illustrating a portion of an electrode assembly in which a substrate tab protrudes downwardly and is connected to a lead tab in a cylindrical secondary battery according to various embodiments of the present disclosure. FIGS. 5A and 5B are front views illustrating various cutout lengths when the substrate tab of FIG. 2 is formed. FIGS. 6A and 6B are front views illustrating various embodiments when the substrate tab of FIG. 2 and a lead tab are welded.

In some embodiments, a positive electrode active material layer 121b coated with a positive electrode active material may be formed on a positive electrode plate 121. In some embodiments, a positive electrode uncoated portion 121a on which the positive electrode active material is not applied may be formed in a partial region of a positive electrode substrate. In addition, in some embodiments, a positive electrode substrate tab 121c may be provided on the positive electrode uncoated portion 121a in a width direction of the positive electrode plate 121.

In some embodiments, when the positive electrode uncoated portion 121a is formed at a central portion of the positive electrode plate 121 in a length direction, the positive electrode substrate tab 121c may be referred to as a center tab. In some implementations, the positive electrode uncoated portion 121a may be formed to be biased to one side of the positive electrode plate 121 in the length direction. This may be equally applied to a negative electrode substrate tab 122c to be described below.

Referring to FIG. 2, in some embodiments, the positive electrode uncoated portion 121a may include the positive electrode substrate tab 121c that is partially cut and folded to protrude outwardly from the positive electrode uncoated portion 121a. That is, a first cutout portion 121d may be formed by partially cutting the positive electrode uncoated portion 121a. In addition, the positive electrode substrate tab 121c may be formed by folding a cut portion of the positive electrode uncoated portion 121a and may extend to the outside of the positive electrode plate 121 (upper side in FIG. 4A).

FIG. 3 is a cross-sectional view along line A-A' of FIG. 2. Referring to FIG. 3, in some embodiments, a thickness of the positive electrode substrate tab 121c may be less than or equal to a thickness of the positive electrode active material layer 121b of the positive electrode plate 121. In some embodiments, the positive electrode substrate tab 121c may be a path for current flow between the positive electrode plate 121 and a cap assembly 140.

In some embodiments, an insulating tape 121f may be attached to the positive electrode substrate tab 121c to prevent a short circuit between the positive electrode substrate tab 121c and a can 110. In some embodiments, the present disclosure is not limited to the insulating tape 121f, and various insulating methods such as a method of applying an insulating material may be applied.

In some embodiments, a size of a region to which the insulating tape 121f is attached may correspond to a size of the positive electrode uncoated portion 121a. In some embodiments, the size of the region to which the insulating tape 121f is attached may be greater than the size of the positive electrode uncoated portion 121a.

On the other hand, in the past, a thickness of a substrate tab to be welded was about 120 µm, and a step difference between the substrate tab and an active material layer was large. Therefore, when pressure was applied to the tab, the tab would press against an uncoated portion, thereby creating cracks. However, in some embodiments, a thickness of the insulating tape may be 30 µm, a thickness of a substrate of the positive electrode plate 121 may be in a range of 13.5 µm to 15 µm, and a thickness of the positive electrode active material layer 121b may be in a range of 70 µm to 80 µm. That is, in some embodiments, even a thickness of an overlapping portion of the positive electrode substrate tab 121c formed by folding the substrate may be less than a thickness of an active material layer. Therefore, in some embodiments, it may be possible to minimize a thickness of a first overlapping portion 121e formed by the positive electrode substrate tab 121c and the positive electrode uncoated portion 121a overlapping each other, thereby minimizing a step difference.

Referring to FIG. 5A, in some embodiments, a length of the first cutout portion 121d of the positive electrode substrate tab 121c may be less than or equal to that of a reference line preset in a width direction of the positive electrode plate 121. Accordingly, a length of the positive electrode substrate tab 121c may be less than or equal to that of the reference line. In this case, the length of the reference line may be set to be one-half of the length of the positive electrode plate 121 in the width direction, as a non-limiting example. That is, a position of the reference line may vary according to a width of the positive electrode plate 121. In addition, the reference line may or may not be actually marked on the positive electrode uncoated portion 121a. Referring to FIG. 5B, in some embodiments, the first cutout portion 121d of the positive electrode substrate tab 121c may be formed to be longer than the reference line preset in the width direction of the positive electrode plate 121. Accordingly, the length of the positive electrode substrate tab 121c may be greater than that of the reference line.

Meanwhile, referring to FIGS. 6A and 6B, in some embodiments, when the positive electrode substrate tab 121c and a first lead tab 124 are connected through welding, a width of the first lead tab 124 may be less than or equal to a width of the positive electrode substrate tab 121c (that is, a length corresponding to the length direction of the positive electrode plate 121). Also, the width of the first lead tab 124 may be greater than the width of the positive electrode substrate tab 121c. In this case, when the width of the first lead tab 124 is greater than the width of the positive electrode substrate tab 121c, a width of a welded portion may correspond to, or may be less than, the width of the positive electrode substrate tab 121c. In some implementations, when the width of the first lead tab 124 is less than the width of the positive electrode substrate tab 121c, a size of the welded portion may be less than a size of the first lead tab 124.

For example, a width of the first cutout portion 121d of the positive electrode uncoated portion 121a (a length corresponding to the length direction of the positive electrode plate 121) may be denoted by the letter a, and the length of the first cutout portion 121d (a length corresponding to the width direction of the positive electrode plate 121) may be denoted by the letter b. A length of the first overlapping portion 121e (a length corresponding to the width direction of the positive electrode plate 121) may be denoted by the letter L. A width of the welded portion between the positive electrode substrate tab 121c and the first lead tab 124 may be denoted by a', and a length of the welded portion between the positive electrode substrate tab 121c and the first lead tab 124 may be denoted by b. The width of the first lead tab 124 (a length corresponding to the length direction of the positive electrode plate 121) may be denoted by W.

In some embodiments, the first cutout portion 121d of the positive electrode uncoated portion 121a for forming the positive electrode substrate tab 121c may be cut to have a length that is greater than or equal to the sum of the length L of the first overlapping portion 121e and the length b' of the welded portion between the positive electrode substrate tab 121c and the first lead tab 124 (b≥L+b').

In some embodiments, the first cutout portion 121d of the positive electrode uncoated portion 121a for forming the positive electrode substrate tab 121c may be cut to have a length that is greater than or equal to the width of the welded portion between the positive electrode substrate tab 121c and the first lead tab 124 (a'≤a).

In some embodiments, a negative electrode active material layer 122b coated with a negative electrode active material may be formed on a negative electrode plate 122. In some embodiments, a negative electrode uncoated portion 122a on which the negative electrode active material is not applied may be formed in a partial region of a negative electrode substrate. In addition, in some embodiments, the negative electrode substrate tab 122c may be provided on the negative electrode uncoated portion 122a in a width direction of the negative electrode plate 122.

Referring to FIG. 2, in some embodiments, the negative electrode uncoated portion 122a may include the negative electrode substrate tab 122c that is partially cut and folded to protrude outward from the negative electrode uncoated portion 122a. That is, a second cutout portion 122d may be formed by cutting a portion of the negative electrode uncoated portion 122a. In addition, the negative electrode substrate tab 122c may be formed by folding a cut portion of the negative electrode uncoated portion 122a and may extend to the outside of the negative electrode plate 122 (lower side in FIG. 4B). In some embodiments, the negative electrode substrate tab 122c may be disposed in a region that does not overlap the positive electrode substrate tab 121c.

Referring to FIG. 3, in some embodiments, a thickness of the negative electrode substrate tab 122c may be less than or equal to a thickness of the negative electrode active material layer 122b of the negative electrode plate 122. In some embodiments, the negative electrode substrate tab 122c may be a path for current flow between the negative electrode plate 122 and a bottom portion 111.

In some embodiments, an insulating tape 122f may be attached to the negative electrode substrate tab 122c to prevent a short circuit between the negative electrode substrate tab 122c and the can 110. In some embodiments, the present disclosure is not limited to the insulating tape 122f, and various insulating methods such as a method of applying an insulating material may be applied.

In some embodiments, a size of a region to which the insulating tape 122f is attached may correspond to a size of the negative electrode uncoated portion 122a. In some embodiments, the size of the region to which the insulating tape 122f is attached may be greater than the size of the negative electrode uncoated portion 122a.

As in the positive electrode substrate tab 121c described above, in the past, a thickness of a substrate tab to be welded was about 120 µm, and a step difference between the substrate tab and an active material layer was large. Therefore, when pressure was applied to the tab, the tab could press against an uncoated portion, thereby causing cracks. However, in some embodiments, a thickness of the insulating tape may be 30 µm, a thickness of a substrate of the negative electrode plate 122 may be in a range of 13.5 µm to 15 µm, and a thickness of the negative electrode active material layer 122b may be in a range of 70 µm to 80 µm. That is, in some embodiments, even a thickness of an overlapping portion of the negative electrode substrate tab 122c formed by folding the substrate may be less than a thickness of an active material layer. Therefore, in some embodiments, it is possible to minimize a thickness of a second overlapping portion 122e formed by the negative electrode substrate tab 122c and the negative electrode uncoated portion 122a overlapping each other, thereby minimizing a step difference.

Referring to FIG. 5A, in some embodiments, a length of the second cutout portion 122d of the negative electrode substrate tab 122c may be less than or equal to the length of a reference line preset in the width direction of the negative electrode plate 122. Accordingly, a length of the negative electrode substrate tab 122c may be less than or equal to that of the reference line. In this case, the length of the reference line may be set to be one half of the length of the negative electrode plate 122 in the width direction, as a non-limiting example. That is, a position of the reference line may vary according to a width of the negative electrode plate 122. In addition, the reference line may or may not be actually marked on the negative electrode uncoated portion 122a. Referring to FIG. 5B, in some embodiments, the second cutout portion 122d of the negative electrode substrate tab 122c may be formed to be longer than the reference line preset in the width direction of the negative electrode plate 122 so that the length of the negative electrode substrate tab 122c may be greater than that of the reference line.

Meanwhile, referring to FIGS. 6A and 6B, in some embodiments, when the negative electrode substrate tab 122c and a second lead tab 125 are connected through welding, a width of the second lead tab 125 may be less than or equal to a width of the negative electrode substrate tab 122c (that is, a length corresponding to a length direction of the negative electrode plate 122). Also, the width of the second lead tab 125 may be greater than the width of the negative electrode substrate tab 122c. In this case, when the width of the second lead tab 125 is greater than the width of the negative electrode substrate tab 122c, a width of a welded portion may correspond to or be less than the width of the negative electrode substrate tab 122c. When the width of the second lead tab 125 is less than the width of the negative electrode substrate tab 122c, a size of the welded portion may be less than a size of the second lead tab 125.

Meanwhile, for example, a width of the second cutout portion 122d of the negative electrode uncoated portion 122a (a length corresponding to the length direction of the negative electrode plate 122) may be denoted by the letter a, and the length of the second cutout portion 122d (a length corresponding to the width direction of the negative electrode plate 122) may be denoted by the letter b. A length of the second overlapping portion 122e (a length corresponding to the width direction of the negative electrode plate 122) may be denoted by the letter L. A width of the welded portion between the negative electrode substrate tab 122c and the second lead tab 125 may be denoted by a', and a length of the welded portion between the negative electrode substrate tab 122c and the second lead tab 125 may be denoted by b'. The width of the second lead tab 125 (a length corresponding to the length direction of the negative electrode plate 122) may be denoted by the letter W.

In some embodiments, the second cutout portion 122d of the negative electrode uncoated portion 122a for forming the negative electrode substrate tab 122c may be cut to have a length that is greater than or equal to the sum of the length L of the second overlapping portion 122e and the length b' of the welded portion between the negative electrode substrate tab 122c and the second lead tab 125 (b≥L+b').

In some embodiments, the second cutout portion 122d of the negative electrode uncoated portion 122a for forming the negative electrode substrate tab 122c may be cut to have a length that is greater than or equal to the width of the welded portion between the negative electrode substrate tab 122c and the second lead tab 125 (a'≤a).

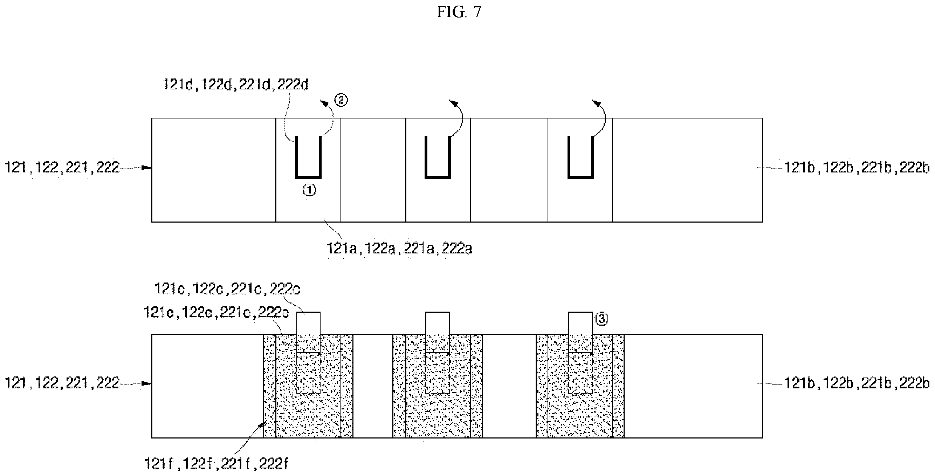

Referring to FIG. 7, a plurality of positive electrode substrate tabs 121c and a plurality of negative electrode substrate tabs 122c may be formed in the length direction of the positive electrode plate 121 and the negative electrode plate 122, respectively. In some embodiments, when the electrode assembly 120 is wound, the plurality of positive electrode substrate tabs 121c may overlap each other, and the plurality of negative electrode substrate tabs 122c may overlap each other. That is, the plurality of positive electrode substrate tabs 121c may overlap each other to be connected to the first lead tab 124, and the plurality of negative electrode substrate tabs 122c may overlap each other to be connected to the second lead tab 125.

In some embodiments, the above-described configuration in the cylindrical secondary battery 100 may be equally implemented in a cylindrical secondary battery 200 described below. Hereinafter, a configuration that may be implemented differently from that of the cylindrical secondary battery 100 will be described. The cylindrical secondary battery 200 according to an embodiment of the present disclosure will be described in detail with reference to the accompanying drawings.

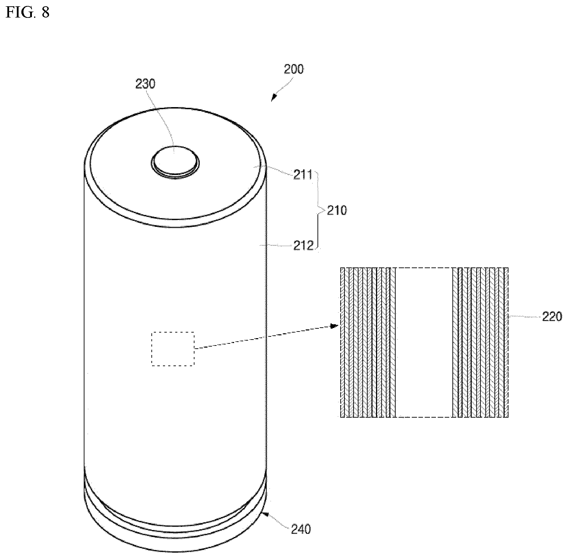

FIG. 8 is a perspective view and a cross-sectional view illustrating the cylindrical secondary battery according to various embodiments of the present disclosure.

As illustrated in FIG. 8, the cylindrical secondary battery 200 according to the present disclosure includes a can 210 having a cylindrical shape, an electrode assembly 220 accommodated in the can 210, and may include a terminal 230 coupled to a terminal hole formed at one end portion of the can 210, and includes a cap assembly 240 for sealing an opening formed at the other end portion of the can 210. The can 210 may include an upper surface portion 211 having a circular shape and a side surface portion 212 extending downward from an edge of the upper surface portion 211 by a certain length. The upper surface portion 211 and the side surface portion 212 of the can 210 may be integrally formed. The upper surface portion 211 having a circular shape may have a flat circular plate shape, and the terminal 230 may be inserted and coupled thereto.

In some embodiments, a lower end portion of the can 210 may be open during a manufacturing process of the cylindrical secondary battery 200. Therefore, during the manufacturing process of the cylindrical secondary battery 200, the electrode assembly 220 may be inserted through the open lower end portion of the can 210 together with an electrolyte. In this case, the electrolyte and the electrode assembly 220 may be inserted into the can 210 in a state in which the open lower end portion faces upward. After the electrolyte and the electrode assembly 220 are inserted into the can 210, a cap plate 260 may be coupled to the open lower end portion to seal the inside of the can 210.

The can 210 may be made of steel, a steel alloy, aluminum, an aluminum alloy, or an equivalent thereof, as non-limiting examples.

In some embodiments, a structure of the above-described electrode assembly 120 of the cylindrical secondary battery 100 is applied to the electrode assembly 220 of the cylindrical secondary battery 200.

The electrode assembly 220 includes a first electrode plate 221, a second electrode plate 222, and a separator. The first electrode plate 221 may be a positive electrode plate, and the second electrode plate 222 may be a negative electrode plate. In some implementations, the reverse may also be possible.

Hereinafter, for convenience of description, a case in which the first electrode plate 221 is a positive electrode plate and the second electrode plate 222 is a negative electrode plate will be described.

In some embodiments, the positive electrode plate 221 may include a first active material layer 221b formed by coating at least one surface of a plate-shaped metal foil made of aluminum (Al) with a positive electrode active material such as a transition metal oxide. In addition, a first electrode uncoated portion 221a not coated with the positive electrode active material may be provided at an upper end portion of the positive electrode plate 221.

The negative electrode plate 222 may include a second active material layer 222b formed by coating at least one surface of a plate-shaped metal foil made of copper (Cu) or nickel (Ni) with a negative electrode active material such as graphite or carbon. In addition, a second electrode uncoated portion 222a not coated with the negative electrode active material may be provided at a lower end portion of the negative electrode plate 222.

In some embodiments, the first electrode uncoated portion 221a may be a positive electrode uncoated portion, and the second electrode uncoated portion 222a may be a negative electrode uncoated portion. The reverse may also be possible. Hereinafter, for convenience of description, a case in which the first electrode uncoated portion 221a is a positive electrode uncoated portion and the second electrode uncoated portion 222a is a negative electrode uncoated portion will be described. In addition, for convenience of description, a case in which the first active material layer 221b and the second active material layer 222b are respectively a positive electrode active material layer and a negative electrode active material layer will be described.

The terminal 230 may be inserted into the terminal hole formed in the upper surface portion 211 of the can 210 and electrically connected to the positive electrode plate 221 of the electrode assembly 220. That is, the terminal 230 may be a positive terminal. The terminal 230 and the can 210 may have different polarities. In this case, the terminal 230 may be a rivet of which a lower portion is pressed and deformed (pressed and molded) through riveting to seal the terminal hole and is electrically connected to the positive electrode plate 221.

The cap assembly 240 may be a circular metal plate and may be coupled to the lower end portion of the can 210. A lower surface of the cap assembly 240 may be exposed to the outside. The cap assembly 240 may be coupled to the lower end portion of the can 210 with a gasket interposed therebetween and thus prevented from being electrically connected to the can 210. Since the cap assembly 240 is not electrically connected to a positive electrode or a negative electrode of the electrode assembly 220, the cap assembly 240 may have no separate electrical polarity.

Meanwhile, in some embodiments, a first substrate tab 221c protruding upward by a certain length may be provided at the positive electrode uncoated portion 221a of the positive electrode plate 221. In addition, a second substrate tab 222c protruding and extending downward by a certain length may be provided at the negative electrode uncoated portion 222a of the negative electrode plate 222. The reverse may also be possible.

In some embodiments, since the second substrate tab 222c is cut from the negative electrode uncoated portion 222a, the second substrate tab 222c may include a material that is the same as or similar to a material of the negative electrode uncoated portion 222a, for example, a copper or nickel material. In addition, since the first substrate tab 221c is cut from the positive electrode uncoated portion 221a, the first substrate tab 221c may include a material that is the same as or similar to a material of the positive electrode uncoated portion 221a, for example, an aluminum material. In some embodiments, the first substrate tab 221c may be a positive electrode substrate tab, and the second substrate tab 222c may be a negative electrode substrate tab. The reverse may also be possible. Hereinafter, for convenience of description, a case in which the first substrate tab 221c is a positive electrode substrate tab, and the second substrate tab 222c is a negative electrode substrate tab will be described.

In some embodiments, the positive electrode substrate tab 221c of the electrode assembly 220 may be connected to the terminal 230, and the negative electrode substrate tab 222c may be connected to the cap assembly 240. In some embodiments, the positive electrode substrate tab 221c and the terminal 230 at an upper side may be electrically connected by a first lead tab 224 welded to the positive electrode substrate tab 221c. In addition, the negative electrode substrate tab 222c and the cap assembly 240 at a lower side may be electrically connected by a second lead tab 225 welded to the negative electrode substrate tab 222c.

In some embodiments, the positive electrode uncoated portion 221a may include a positive electrode substrate tab 221c that is partially cut and folded to protrude outward from the positive electrode uncoated portion 221a. In addition, the negative electrode uncoated portion 222a may include the negative electrode substrate tab 222c that is partially cut and folded to protrude outward from the negative electrode uncoated portion 222a. That is, first and second cutout portions 221d and 222d may be formed by cutting portions of the positive electrode uncoated portion 221a and the negative electrode uncoated portion 222a. In addition, in the positive electrode uncoated portion 221a and the negative electrode uncoated portion 222a, the cut portions of the positive electrode uncoated portion 221a and the negative electrode uncoated portion 222a may be folded to respectively form first and second overlapping portions 221e and 222e at which the positive electrode substrate tab 221c and the negative electrode substrate tab 222c overlap the positive electrode uncoated portion 221a and the negative electrode uncoated portion 222a, respectively.

In addition, in some embodiments, first and second insulating tapes 221f and 222f are attached to the positive electrode substrate tab 221c and the negative electrode substrate tab 222c, respectively, thereby preventing a short circuit between the positive and negative electrode substrate tabs 221c and 222c and the can 210.

The positive electrode substrate tab 221c and the negative electrode substrate tab 222c of the cylindrical secondary battery 200 may be identical to the positive electrode substrate tab 121c and the negative electrode substrate tab 122c of the cylindrical secondary battery 100. Accordingly, since a process of forming the substrate tab has been described above, descriptions thereof will not be repeated.

By way of summation and review, embodiments are directed to a cylindrical secondary battery in which a step difference between a substrate tab formed on an electrode plate uncoated portion and an electrode plate may be minimized.

In a cylindrical secondary battery according to various embodiments of the present disclosure, a portion of an uncoated portion of an electrode plate may be cut to form a substrate tab, thereby minimizing a step difference between the substrate tab and the electrode plate.

In addition, in a cylindrical secondary battery according to various embodiments, a portion of an uncoated portion of an electrode plate may be cut to form a substrate tab such that a step difference may be minimized. Thus, when stress is concentrated on an edge of the substrate tab, cracking of the electrode plate can be prevented.

Furthermore, in a cylindrical secondary battery according to various embodiments, when a plurality of substrate tabs are formed in a length direction of an electrode plate, the plurality of substrate tabs may be allowed to overlap each other when an electrode assembly is wound, thereby expanding a structure of the electrode plate.

In addition, in a cylindrical secondary battery according to various embodiments of the present disclosure, a cutout width and length of a substrate tab can be changed, thereby applying various design structures for connecting a lead tab to the substrate tab.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A cylindrical secondary battery, comprising:
a can having a cylindrical shape and an open portion at one end;
an electrode assembly that is wound in a cylindrical shape by stacking a first electrode plate including a first electrode uncoated portion, a separator, and a second electrode plate including a second electrode uncoated portion disposed in a direction opposite to the first electrode uncoated portion and is accommodated in the can; and
a cap assembly configured to close the open end portion of the can in a state in which the electrode assembly is accommodated in the can,
wherein:
the first electrode uncoated portion includes a first substrate tab that is partially cut and folded to protrude outwardly from the first electrode uncoated portion, and
the second electrode uncoated portion includes a second substrate tab which is partially cut and folded to protrude outwardly from the second electrode uncoated portion.

2. The cylindrical secondary battery as claimed in claim 1, further including an insulating tape attached to each of the first electrode uncoated portion and the second electrode uncoated portion.

3. The cylindrical secondary battery as claimed in claim 2, wherein a size of a region to which the insulating tape is attached corresponds to, or is greater than, a size of each of the first electrode uncoated portion and the second electrode uncoated portion.

4. The cylindrical secondary battery as claimed in any one of claims 1 to 3, wherein thicknesses of the first substrate tab and the second substrate tab are less than or equal to thicknesses of an active material layer of the first electrode plate and an active material layer of the second electrode plate, respectively.

5. The cylindrical secondary battery as claimed in any one of claims 1 to 4, wherein the first substrate tab and the second substrate tab are formed as a plurality of first substrate tabs and a plurality of second substrate tabs in a length direction of the first electrode plate and the second electrode plate, respectively, optionally wherein the electrode assembly is wound, the plurality of first substrate tabs overlap each other, and the plurality of second substrate tabs overlap each other.

6. The cylindrical secondary battery as claimed in any one of claims 1 to 5, further comprising a lead tab electrically connected to each of the first substrate tab and the second substrate tab and electrically connected to the cap assembly.

7. The cylindrical secondary battery as claimed in claim 6, wherein the first substrate tab and the second substrate tab are welded to the lead tab, and a width of the lead tab is greater than a width of each of the first substrate tab and the second substrate tab, a width of a welded portion corresponds to or is less than a width of each of the first substrate tab and the second substrate tab.

8. The cylindrical secondary battery as claimed in claim 6, wherein the first substrate tab and the second substrate tab are welded to the lead tab, and a width of the lead tab is less than a width of each of the first substrate tab and the second substrate tab, a size of a welded portion is less than a size of the lead tab.

9. The cylindrical secondary battery as claimed in any one of claims 1 to 8, wherein each of the first substrate tab and the second substrate tab is cut to have a length that is less than or equal to that of a reference line preset in a width direction of the first electrode plate and the second electrode plate.

10. The cylindrical secondary battery as claimed in any one of claims 1 to 9, wherein each of the first substrate tab and the second substrate tab is cut to be longer than a reference line preset in a width direction of the first electrode plate and the second electrode plate.

11. The cylindrical secondary battery as claimed in any one of claims 1 to 10,
wherein:
the first electrode uncoated portion includes a first substrate tab that is partially cut to form a first cutout portion and is folded such that the first cutout portion protrudes outwardly from the first electrode uncoated portion, and
the second electrode uncoated portion includes a second substrate tab that is partially cut to form a second cutout portion and is folded such that the second cutout portion protrudes outward from the second electrode uncoated portion; and
wherein a first overlapping portion and a second overlapping portion respectively overlapping the first electrode uncoated portion and the second electrode uncoated portion are formed at the first substrate tab and the second substrate tab.

12. The cylindrical secondary battery as claimed in claim 11, wherein a length of each of the first cutout portion and the second cutout portion corresponding to a width direction of each of the first electrode plate and the second electrode plate is greater than or equal to a sum of a length of each of the first overlapping portion and the second overlapping portion corresponding to the width direction of each of the first electrode plate and the second electrode plate and a length of a portion welded to the lead tab.

13. The cylindrical secondary battery as claimed in claim 11, wherein a width of each of the first cutout portion and the second cutout portion corresponding to a length direction of each of the first electrode plate and the second electrode plate is greater than or equal to a width of a portion welded to the lead tab.

14. The cylindrical secondary battery as claimed in any one of claims 1 to 13, wherein:
the can has an open upper end portion, and
the cap assembly is coupled to the upper end portion of the can, optionally wherein:
the first substrate tab protrudes toward the cap assembly to electrically connect the first electrode plate and the cap assembly, and
the second substrate tab protrudes toward a bottom surface of the can to electrically connect the second electrode plate and the bottom surface of the can.

15. The cylindrical secondary battery as claimed in any one of claims 1 to 13, wherein:
the can has an open lower end portion,
the cap assembly is coupled to the lower end portion of the can, and
the cylindrical secondary battery further includes a terminal positioned on an upper surface of the can having a cylindrical shape, optionally wherein:
the first substrate tab protrudes toward the terminal to electrically connect the first electrode plate and the terminal, and
the second substrate tab protrudes toward the cap assembly to electrically connect the second electrode plate and the can.
